# EUROPÄISCHE PATENTANMELDUNG

(11) **EP 1 759 922 A1**
(43) Veröffentlichungstag der Anmeldung: **07.03.2007**
(21) Anmeldenummer: 06118336.4
(22) Anmeldetag: 02.08.2006
(51) Int. Cl.: B60Q 1/26, F21S 8/10

(54) **Beleuchtungsvorrichtung für Fahrzeuge**

(30) Priorität: 31.08.2005 DE 102005041197
(71) Anmelder: Hella KGaA Hueck & Co., 59552 Lippstadt (DE)
(72) Erfinder: Gödecker, Reiner, 59558 Lippstadt (DE); Kesseler, Dr. Wolfgang, 59597 Erwitte (DE); Könning, Thomas, 59557, Lippstadt (DE)

(57) **Zusammenfassung**

Die Erfindung betrifft eine Beleuchtungsvorrichtung für Fahrzeuge mit einer Lichtquelle zur Erzeugung eines Lichtbündels in einem sichtbaren Frequenzbereich und mit einer Strahlungsquelle zur Erzeugung eines Strahlungsbündels in einem infraroten Frequenzbereich, wobei die Lichtquelle als Tagfahrlichtquelle oder Positionslichtquelle ausgebildet ist, und dass eine Schalteinrichtung vorgesehen ist, derart, dass mit Einschalten und Ausschalten der IR-Strahlungsquelle die Lichtquelle ein- bzw. ausgeschaltet wird.

## Beschreibung

Die Erfindung betrifft eine Beleuchtungsvorrichtung für Fahrzeuge mit einer Lichtquelle zur Erzeugung eines Lichtbündels in einem sichtbaren Frequenzbereich und mit einer Strahlungsquelle zur Erzeugung eines Strahlungsbündels in einem infraroten Frequenzbereich.

Damit insbesondere bei Nachtfahrten das Sichtfeld eines in einem Kraftfahrzeug sitzenden Fahrzeuglenkers verbessert wird, ist es aus der DE 102 54 023 A1 bekannt, einen Scheinwerfer für Fahrzeuge mit einer Abblendlicht- bzw. Fernlichtfunktion dahingehend zu erweitern, dass eine Strahlungsquelle zur Erzeugung einer Strahlung im infraroten Frequenzbereich integriert wird. Durch Anordnung eines Erfassungssystems an dem Fahrzeug, beispielsweise durch eine Infrarot-Kamera, können Bilddaten aufgenommen und auf einem Bildschirm im Fahrzeuginnenraum (z.B. Head-Up-Display) abgebildet werden.

Auch aus der DE 101 29 743 C2 ist eine Beleuchtungsvorrichtung für Fahrzeuge bekannt, die zum einen eine Lichtquelle zur Erzeugung eines Lichtbündels im sichtbaren Frequenzbereich und zum anderen eine Strahlungsquelle zur Erzeugung eines Strahlungsbündels im infraroten Frequenzbereich umfasst. Durch Zuschalten der Strahlungsquelle kann in Verkehrssituationen, in der die Fernlichtfunktion nicht aktiviert sein kann - wegen Blendung des Gegenverkehrs -, die Strahlungsquelle eingeschaltet werden, um einen erweiterten Sichtbereich zu ermöglichen.

Nach den bekannten Beleuchtungsvorrichtungen ist es vorgesehen, dass die Strahlungsquelle zur Erzeugung eines Strahlungsbündels in dem infraroten Frequenzbereich zusammen mit einer Scheinwerferlichtfunktion, wie Abblendlichtfunktion, betrieben wird. Hierdurch ist die Einsatzfähigkeit der Strahlungsquelle zur verbesserten Ausleuchtung des Sichtfeldes beschränkt.

Aus der nicht vorveröffentlichten deutschen Patentanmeldung 10 2004 022 168.5 ist eine Beleuchtungsvorrichtung für Fahrzeuge bekannt, die eine Lichtquelle zur Erzeugung eines Lichtbündels im sichtbaren Frequenzbereich und eine Strahlungsquelle zur Erzeugung eines Strahlungsbündels im infraroten Frequenzbereich in einer gemeinsamen Baueinheit vorsieht. Die Lichtquelle der Baueinheit ist als eine Positionslichtquelle zur Erzeugung eines Positionslichtes ausgebildet, so dass im eingeschalteten Zustand ein abgestelltes Fahrzeug kenntlich gemacht werden kann. Die Positionslichtquelle ist somit unabhängig von anderen Lichtquellen, insbesondere von Lichtquellen mit Scheinwerferfunktion. Sie muss insbesondere auch bei ausgeschalteter Zündung funktionsfähig sein. Neben der Baueinheit für das Positionslicht und die IR-Strahlungsquelle ist auch ein Scheinwerfer vorgesehen, der über eine Positionslichtquelle verfügt. Die bekannte Beleuchtungsvorrichtung weist ferner eine Steuereinrichtung auf, die die Redundanz der Positionslichtfunktion in der Baueinheit aufhebt, wenn die IR-Strahlungsquelle ein- bzw. ausgeschaltet wird. Es erfolgt somit in Abhängigkeit von dem Schaltzustand der IR-Strahlungsquelle ein Ein- bzw. Abschalten der Positionslichtquelle des Scheinwerfers bzw. der Positionslichtquelle der gesonderten Baueinheit. Nachteilig an der bekannten Beleuchtungsvorrichtung ist, dass die mit der IR-Strahlungsquelle zusammen in einer gemeinsamen Baueinheit zusammengefasste Positionslichtquelle abhängig vom Zustand des gesonderten Scheinwerfers geschaltet wird.

Aufgabe der vorliegenden Erfindung ist es daher, eine Beleuchtungsvorrichtung für Fahrzeuge derart weiterzubilden, dass bei dem Einsatz einer IR-Strahlungsquelle zur Erhöhung eines Ausleuchtungsgrades eine größere Unabhängigkeit von anderen Lichtfunktionen, insbesondere von in einem Scheinwerfer angeordneten Lichtfunktionen gegeben ist, wobei ein unerwünschter Rotlichteindruck der IR-Strahlungsquelle vermieden wird.

Zur Lösung dieser Aufgabe ist die Erfindung in Verbindung mit dem Oberbegriff des Patentanspruchs 1 dadurch gekennzeichnet, dass die Lichtquelle als Tagfahrlichtquelle oder Positionslichtquelle ausgebildet ist, und dass eine Schalteinrichtung vorgesehen ist, derart, dass mit Einschalten und Ausschalten der IR-Strahlungsquelle die Lichtquelle ein- bzw. ausgeschaltet wird.

Der besondere Vorteil der Erfindung besteht darin, dass die IR-Strahlungsquelle unabhängig von weiteren Funktionen eines Scheinwerfers, insbesondere unabhängig von der Abblendlichtfunktion, aktiviert werden kann. Die erfindungsgemäße IR-Strahlungsquelle ist zusammen mit einer als Tagfahrlichtquelle oder Positionslichtquelle kombiniert, wobei eine Schalteinrichtung sicherstellt, dass zur Vermeidung eines unerwünschten Rotlichteindruckes die IR-Strahlungsquelle stets zusammen mit der Positionslichtquelle eingeschaltet ist. Vorteilhaft kann die IR-Strahlungsquelle zusammen mit der Tagfahrlicht- und Positionslichtquelle außerhalb eines Scheinwerfers angeordnet sein. In diesem Fall ist sie nicht nur lichttechnisch, sondern auch räumlich von dem Scheinwerfer unabhängig ausgebildet.

Nach einer Weiterbildung der Erfindung bilden die IR-Strahlungsquelle und die ihr zugeordnete Lichtquelle eine gemeinsame Baueinheit, die unabhängig von der Scheinwerferlichtfunktion in einem Scheinwerfergehäuse integriert oder entfernt von demselben angeordnet sein kann.

Nach einer Weiterbildung der Erfindung ist mindestens eine Lichtquelle und/oder ein der Lichtquelle zugeordneter Reflektor angrenzend zu der IR-Strahlungsquelle und/oder einem Strahlungsaustritt der IR-Strahlungsquelle angeordnet. Hierdurch ergibt sich eine kompakte Bauweise der Baueinheit bestehend aus Lichtquelle und IR-Strahlungsquelle, so dass sie Platz sparend auch in einem Scheinwerfergehäuse integriert angeordnet sein kann.

Nach einer Weiterbildung der Erfindung ist die Lichtquelle als eine Leuchtdiode ausgebildet, wobei eine Mehrzahl von Leuchtdioden auf einem dreidimensional verlaufenden Träger angeordnet ist. Auf diese Weise kann der Raum der Baueinheit Platz sparend für die Lichtquelle zur Erzeugung der Positionslichtfunktion oder der Tagfahrlichtposition genutzt werden.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1a: eine schematische Vorderansicht einer Beleuchtungsvorrichtung nach einer ersten Ausführungsform,
- Figur 1b: ein schematischer Vertikalschnitt durch die Beleuchtungsvorrichtung nach der ersten Ausführungsform gemäß Figur 1a,
- Figur 2a: eine schematische Vorderansicht einer Beleuchtungsvorrichtung nach einer zweiten Ausführungsform,
- Figur 2b: ein schematischer Vertikalschnitt durch die Beleuchtungsvorrichtung nach der zweiten Ausführungsform gemäß Figur 2a,
- Figur 3a: eine schematische Vorderansicht einer Beleuchtungsvorrichtung nach einer dritten Ausführungsform,
- Figur 3b: ein schematischer Vertikalschnitt durch die Beleuchtungsvorrichtung nach der dritten Ausführungsform gemäß Figur 3a,
- Figur 4a: eine schematische Vorderansicht einer Beleuchtungsvorrichtung nach einer vierten Ausführungsform,
- Figur 4b: eine schematische Seitenansicht der Beleuchtungsvorrichtung nach einer vierten Ausführungsform gemäß Figur 4a.

Die erfindungsgemäße Beleuchtungsvorrichtung für Fahrzeuge ist als eine gesonderte Baueinheit 1 ausgebildet, die in einem nicht dargestellten Scheinwerfergehäuse oder ortsfern von demselben an einer Karosserie des Fahrzeugs angeordnet sein kann. Der nicht dargestellte Scheinwerfer kann Lichtquellen zur Erzeugung einer Abblendlicht- und einer Fernlichtfunktion und einer Blinklichtfunktion und dergleichen enthalten.

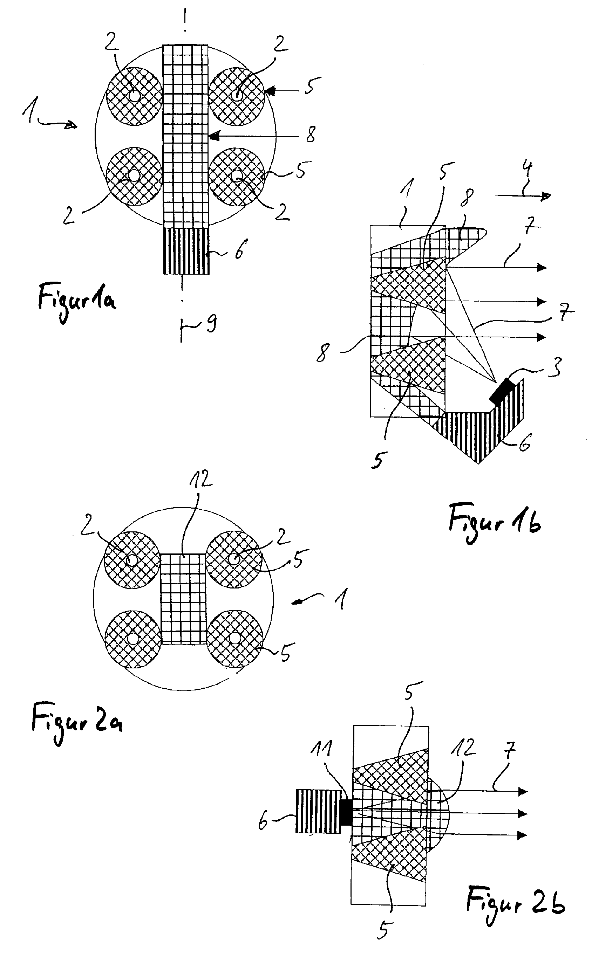

Die Baueinheit 1 umfasst nach einer ersten Ausführungsform gemäß den Figuren 1a und 1b eine Anzahl von vier Lichtquellen 2 zur Erzeugung eines Lichtbündels im sichtbaren Frequenzbereich und eine Strahlungsquelle (IR-Strahlungsquelle 3) zur Erzeugung eines Strahlungsbündels 7 in einem infraroten Frequenzbereich.

Die Lichtquellen 2 sind jeweils als Leuchtdioden (LED-Leuchtelemente) ausgebildet zur Erzeugung einer Positionslichtfunktion. Die Positionslichtfunktion dient üblicherweise zur Kenntlichmachung eines abgestellten Fahrzeugs. Diese Lichtquelle 2 ist dadurch gekennzeichnet, dass sie einen relativ geringen Ausleuchtungsgrad aufweist. Alternativ können die Lichtquellen 2 auch zur Erzeugung einer Tagfahrlichtfunktion dienen, bei der die so gebildete Tagfahrlichtleuchte das Fahrzeug bei Tagfahrten leichter erkennbar macht. Im Vergleich zum Positionslicht ist die Lichtverteilung in horizontaler Richtung bei dem Tagfahrlicht schmaler ausgebildet (+/-20°). Die der IR-Strahlungsquelle 3 zugeordnete Lichtquelle 2 dient nach der Erfindung quasi als Huckepack-Lichtquelle für die Strahlungsquelle 3, wobei eine nicht dargestellte Schalteinrichtung vorgesehen ist, die es zwingend vorsieht, dass beim Einschalten der IR-Strahlungsquelle 3 stets die Lichtquelle 2 mit eingeschaltet wird. Vorteilhaft kann hierdurch ein unerwünschter Rotlichteindruck der IR-Strahlungsquelle 3 beim Betrieb derselben vermieden werden.

Die Schalteinrichtung kann beispielsweise einen Schalter umfassen, so dass bei Einschalten und Ausschalten der IR-Strahlungsquelle 3 gleichzeitig die Lichtquelle 2 ein- bzw. ausgeschaltet wird. Zusätzlich kann die Schalteinrichtung einen Schalter umfassen, mittels dessen die Tagfahrlichtquelle 2 bzw. die Positionslichtquelle 2 ein- bzw. ausgeschaltet werden kann, ohne dass die IR-Strahlungsquelle 3 ein- bzw. ausgeschaltet wird. Hierdurch wird ermöglicht, dass die Tagfahrlichtquelle 2 bzw. die Positionslichtquelle 2 für den eigentlichen Einsatzzweck derselben genutzt werden kann.

Die IR-Strahlungsquelle 3 ist als IR-Laserdiode ausgebildet, die nach der ersten Ausführungsform gemäß Figur 1a und Figur 1b in Lichtaustrittsrichtung 4 vor den vier verteilt angeordneten Leuchtdioden 2 und den jeweils denselben zugeordneten Reflektoren 5 positioniert ist. Die Laserstrahlungsquelle 3 ist auf einem Kühlkörper 6 in einem spitzen Winkel zu einer Vertikalen angeordnet, so dass die von der IR-Laserdiode 3 abgestrahlte IR-Strahlung 7 in Richtung eines lang gestreckten IR-Reflektors 8 abgestrahlt wird, wobei der IR-Reflektor 8 aufrecht stehend zwischen jeweils zwei Lichtquellen 2 und zugehörigen Reflektoren 5 angeordnet ist. Der IR-Reflektor 8 dient als IR-Strahlenverteiler zur Erzeugung einer vorgegebenen Strahlungsverteilung im infraroten Frequenzbereich. Die IR-Strahlungsquelle 3 und der IR-Reflektor 8 bilden eine IR-Erstreckungsebene 9, die in vertikaler Richtung verläuft und zwischen zwei Lichtquellen 2 angeordnet ist. Die Leuchtdioden 2 sind auf einem nicht dargestellten Träger angeordnet, der in zweidimensionaler Richtung oder in dreidimensionaler Richtung in Abhängigkeit von den Bauraumverhältnissen verlaufen kann.

Nach einer zweiten Ausführungsform der Erfindung gemäß Figur 2a und Figur 2b weist die Baueinheit 1 im Vergleich zur ersten Ausführungsform gleich angeordnete Lichtquellen 2 auf. Im Unterschied zu der ersten Ausführungsform ist eine IR-Strahlungsquelle 11 in Lichtaustrittsrichtung 4 hinter den Lichtquellen 2 bzw. den Reflektoren 5 angeordnet. In Lichtaustrittsrichtung 4 vor der IR-Strahlungsquelle 11 ist eine massive IR-Linse 12 vorgesehen, die die IR-Strahlung 7 in Lichtaustrittsrichtung 4 projiziert. Die IR-Linse 12 ist in einem mittleren Bereich zwischen den Lichtquellen 2 bzw. den denselben zugeordneten Reflektoren 5 angeordnet und grenzt unmittelbar an die Reflektoren 5 der Lichtquellen 2 an. Die IR-Linse 12 ist quasi von den Reflektoren 5 der Lichtquellen 2 eingefasst bzw. teilweise umschlossen.

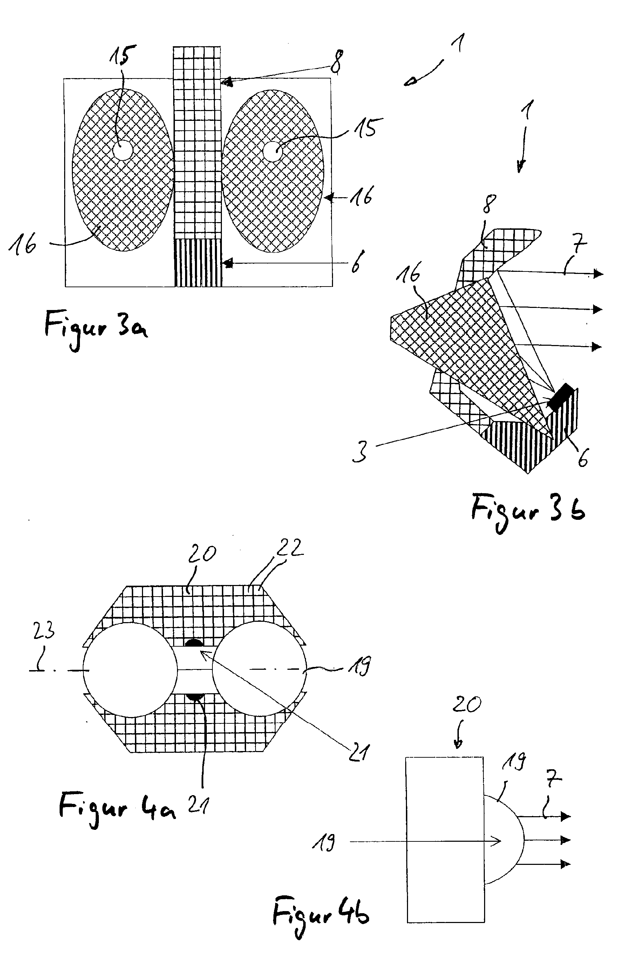

Nach einer dritten Ausführungsform der Erfindung gemäß den Figuren 3a und 3b sind im Unterschied zu der ersten Ausführungsform gemäß Figur 1a und 1b lediglich zwei Lichtquellen 15 mit denselben jeweils zugeordneten vergrößerten Reflektoren 16 vorgesehen. Die Reflektoren 16 reichen mit einem vorderen Bereich bis zu dem Kühlkörper 6 der IR-Strahlungsquelle 3 . Gleiche Bauteile bzw. Bauteilfunktionen der unterschiedlichen Ausführungsbeispiele sind mit den gleichen Bezugszeichen versehen.
Der IR-Reflektor 8 bzw. der Kühlkörper 6 bilden zugleich ein teilweises Gehäuse für die Lichtquellen 2 bzw. 15.

Nach einer vierten Ausführungsform gemäß den Figuren 4a und 4b ist einer nicht dargestellten IR-Strahlungsquelle eine Projektionslinse 19 vorgelagert, die teilweise in einem Reflektor 20, der mindestens einer Lichtquelle 21 zugeordnet ist, eingefasst. Der Reflektor 20 ist einstückig ausgebildet und weist eine Mehrzahl von facettenartigen Reflektorelementen 22 auf. Im vorliegenden Ausführungsbeispiel sind zwei IR-Strahlungsquellen vorgesehen, denen jeweils die Projektionslinse 19 vorgelagert ist. In horizontaler Richtung zwischen den Projektionslinsen 19 sind entgegen der Lichtaustrittsrichtung 4 zurückgesetzt die Lichtquellen 21 ober- und unterhalb einer horizontalen Mittelebene 23 des Reflektors 20 angeordnet.

Die Strahlungsleistung der IR-Strahlungsquellen kann in Abhängigkeit von Zustandsparametern, wie beispielsweise der Geschwindigkeit des Fahrzeugs und der Temperatur regelbar sein. Auch können die Lichtquellen gedimmt ausgebildet sein, so dass sie eine unterschiedliche Leistung abgeben können. Weiterhin ermöglicht die Erfindung den Einsatz der Baueinheit 1 außerhalb eines Hauptscheinwerfers.

Alternativ können die Reflektoren der Lichtquelle auch als Freiformreflektoren; der IR-Reflektor als Freiformreflektor ausgebildet sein.

## Patentansprüche

1. Beleuchtungsvorrichtung für Fahrzeuge mit einer Lichtquelle zur Erzeugung eines Lichtbündels in einem sichtbaren Frequenzbereich und mit einer Strahlungsquelle zur Erzeugung eines Strahlungsbündels in einem infraroten Frequenzbereich, **dadurch gekennzeichnet, dass** die Lichtquelle (2, 15, 21) als Tagfahrlichtquelle oder Positionslichtquelle ausgebildet ist, und dass eine Schalteinrichtung vorgesehen ist, derart, dass mit Einschalten und Ausschalten der IR-Strahlungsquelle (3, 11) die Lichtquelle (2, 15, 21) ein- bzw. ausgeschaltet wird.

2. Beleuchtungsvorrichtung nach Anspruch 1, **dadurch gekennzeichnet, dass** die Lichtquelle (2, 15, 21) und die IR-Strahlungsquelle (3, 11) eine gemeinsame Baueinheit (1) bilden.

3. Beleuchtungsvorrichtung nach Anspruch 1 oder 2, **dadurch gekennzeichnet, dass** die Lichtquelle (2, 15, 21) und/oder ein der Lichtquelle (2, 15, 21) zugeordneter Reflektor (5, 16, 20) angrenzend zu der IR-Strahlungs-quelle (3, 11) und/oder einem Strahlungsaustritt der IR-Strahlungsquelle (3, 11) angeordnet ist.

4. Beleuchtungsvorrichtung nach einem der Ansprüche 1 bis 3, **dadurch gekennzeichnet, dass** die Lichtquelle (2, 15, 21) als eine Leuchtdiode ausgebildet ist, wobei eine Mehrzahl von Leuchtdioden (2, 15, 21) auf einem dreidimensional verlaufenden Träger angeordnet sind.

5. Beleuchtungsvorrichtung nach einem der Ansprüche 1 bis 4, **dadurch gekennzeichnet, dass** der Reflektor (20) aus einer Mehrzahl von facettenförmigen Reflektorelementen (22) besteht zur Erzeugung der Lichtfunktion.

6. Beleuchtungsvorrichtung nach einem der Ansprüche 1 bis 5, **dadurch gekennzeichnet, dass** der IR-Strahlungsquelle (11) eine Projektionslinse (12) vorgelagert ist.

7. Beleuchtungsvorrichtung nach einem der Ansprüche 1 bis 6, dass der IR-Strahlungsquelle (3) ein IR-Strahlenverteiler zugeordnet ist, der zusammen mit der IR-Strahlungsquelle (3) eine IR-Erstreckungsebene (9) aufspannt, und dass die IR-Erstreckungsebene (9) in horizontaler und/oder vertikaler Richtung zwischen zumindest zwei Lichtquellen (2) verläuft.

8. Beleuchtungsvorrichtung nach einem der Ansprüche 1 bis 7, **dadurch gekennzeichnet, dass** der IR-Strahlenverteiler als ein IR-Reflektor (8) oder als eine IR-Linse (12) ausgebildet ist.

9. Beleuchtungsvorrichtung nach einem der Ansprüche 1 bis 8, **dadurch gekennzeichnet, dass** die Schalteinrichtung derart ausgebildet ist, dass die Lichtquelle (2, 15, 21) unabhängig von der IR-Strahlungsquelle (3, 11) ein- bzw. ausgeschaltet wird.

10. Beleuchtungsvorrichtung nach einem der Ansprüche 1 bis 9, **dadurch gekennzeichnet, dass** Strahlungsleistung der IR-Strahlungsquelle (3, 11) in Abhängigkeit von Zustandsparametern regelbar ist.
